# EUROPÄISCHE PATENTSCHRIFT

(11) **EP 2 002 162 B1**
(45) Veröffentlichungstag und Bekanntmachung des Hinweises auf die Patenterteilung: **17.08.2011**
(21) Anmeldenummer: 07724063.8
(22) Anmeldetag: 05.04.2007
(51) Int. Cl.: F16L 9/06, F16L 11/11, F16L 11/15, F16L 25/00

(54) **FLUIDLEITUNG UND FLEXIBLES LEITUNGSROHR FÜR EINE FLUIDLEITUNG**
FLUID DUCT, AND FLEXIBLE PIPE FOR A FLUID DUCT
CONDUITE A FLUIDE ET TUYAU FLEXIBLE POUR UNE CONDUITE A FLUIDE

(30) Priorität: 05.04.2006 DE 202006005545 U
(43) Veröffentlichungstag der Anmeldung: 17.12.2008
(73) Patentinhaber: FRÄNKISCHE ROHRWERKE Gebr. Kirchner GmbH & Co. KG, 97486 Königsberg (DE)
(72) Erfinder: KRAUSS, Manfred, 97265 Hettstadt (DE); SCHRÖTER, Sören, 96103 Hallstadt (DE)
(74) Vertreter: Herzog, Markus
(86) Internationale Anmeldenummer: PCT/EP2007/003122
(87) Internationale Veröffentlichungsnummer: WO 2007/115800

(56) Entgegenhaltungen:
- WO-A-97/21053
- DE-A1- 2 824 395
- DE-A1- 4 221 926
- DE-A1- 4 315 175
- FR-A1- 2 702 991
- FR-A3- 2 533 996
- GB-A- 2 116 434
- GB-A- 2 244 671
- US-A- 5 829 483
- US-A- 5 864 938
- US-A- 5 983 950

## Beschreibung

Die vorliegende Erfindung betrifft eine Fluidleitung, wie sie beispielsweise in Kraftfahrzeugen eingesetzt werden kann, um Flüssigkeit zur Kraftfahrzeugscheibenreinigung oder zur Kraftfahrzeugscheinwerferreinigung zuzuführen. Ferner betrifft die vorliegende Erfindung ein flexibles Leitungsrohr, das bei einer derartigen Fluidleitung eingesetzt werden kann.

Aus der DE 198 11 019 A1 ist eine Fluidleitung bekannt, bei welcher ein flexibles Leitungsrohr eine Mehrzahl von einander abwechselnden Wellrohrabschnitten rund Glattrohrabschnitten umfasst. Dieses aus flexiblem Kunststoffmaterial in einem kontinuierlich ablaufenden Extrusionsvorgang hergestellte Leitungsrohr wird dazu eingesetzt, Flüssigkeit von einem Flüssigkeitsreservoir zu den Spritzdüsen einer Scheiben- bzw. Scheinwerferwaschanlage in einem Kraftfahrzeug zu führen. Um die Verbindung der Spritzdüsen mit dem flexiblen Leitungsrohr herzustellen, wird dieses in einem Glattrohrabschnitt etwa mittig getrennt, so dass zwei Leitungsrohrabschnitte entstehen, von welchen jeder mit einem Glattrohrabschnitt endet, der etwa halb so lang ist, wie die Glattrohrabschnitte, die grundsätzlich an einem derartigen flexiblen Leitungsrohr vorhanden sind. Die Spritzdüse bzw. ein mit einem derartigen Glattrohrabschnitt dann zu koppelndes Element kann dann in einen derartigen Glattrohrabschnitt eingeschoben werden.

Darüber hinaus beschreibt das Dokument US 5983950 eine

herkömmliche Fluidleitung. Es ist die Aufgabe der vorliegenden Erfindung, eine Fluidleitung bzw. ein flexibles Leitungsrohr für eine derartige Fluidleitung bereitzustellen, welche bei kostengünstiger Herstellbarkeit einen zuverlässigen Fluidtransport und eine zuverlässige Anbindung an andere Systembereiche gestatten.

Gemäß einem ersten Aspekt der vorliegenden Erfindung wird diese Aufgabe gelost durch eine Fluidleitung, insbesondere zum Einsatz in Kraftfahrzeugen zum Zuführen von Flüssigkeit zur Kraftfahrzeugscheibenreinigung oder zur Kraftfahrzeugscheinwerferreinigung, umfassend ein flexibles Leitungsrohr mit einer Mehrzahl von Wellrohrabschnitten und einer Mehrzahl von Glattrohrabschnitten, wenigstens einen Leitungsverbinder mit einem Leitungsrohr-Anschlussabschnitt, welcher in einen Glattrohrabschnitt eingeführt ist sowie für jeden Leitungsverbinder eine Stützhülse, welche den den Leitungsrohr-Anschlussabschnitt aufnehmenden Glattrohrabschnitt umgibt und den Glattrohrabschnitt gegen den Leitungsrohr-Anschlussabschnitt presst.

Bei einer erfindungsgemäßen Fluidleitung wird also ein mit einem Glattrohrabschnitt eines flexiblen Leitungsrohrs zu koppelnder Leitungsverbinder nicht nur in diesen eingeschoben oder auf diesen aufgeschoben. Vielmehr wird durch Einsatz einer einem derartigen Leitungsverbinder zugeordneten Stützhülse dafür gesorgt, dass der mit dem Leitungsverbinder zu koppelnde Abschnitt des flexiblen Leitungsrohrs, also ein Glattrohrabschnitt, fest gegen den Leitungsrohr-Anschlussabschnitt angepresst wird.

Da also die Stützhülse die feste Verbindung gewährleistet, kann das flexible Leitungsrohr aus weniger festem, beispielsweise aber flexiblerem Material aufgebaut werden, was hinsichtlich der Herstellungskosten vorteilhaft ist und die Gefahr des Abknickens des flexiblen Leitungsrohrs auf Grund zu starren Materials ausschließt.

Da bei dem erfindungsgemäßen Aufbau einer Fluidleitung die Stützhülse einen wesentlichen Beitrag zur festen Verbindung zwischen dem flexiblen Leitungsrohr und einem Leitungsverbinder liefert, kann weiter vorgesehen sein, dass der Glattrohrabschnitt eine vorbestimmte Länge aufweist, welche kürzer ist als die Länge des in diesen eingeführten Leitungsrohr-Anschlussabschnittes.

Bei der erfindungsgemäßen Anordnung ist dann vorgesehen, dass die Stützhülse mit einem ersten Hülsenabschnitt den Glattrohrabschnitt umgibt und mit einem zweiten Hülsenabschnitt an dem nicht von dem Glattrohrabschnitt überdeckten Bereich des Leitungsrohr-Anschlussabschnittes anliegt. Auf diese Art und Weise kann trotz eines vergleichsweise kurz ausgestalteten Glattrohrabschnitts die gesamte Länge des Leitungsrohr-Anschlussabschnittes zur Herstellung einer festen Verbindung zwischen dem flexiblen Leitungsrohr und dem Leitungsverbinder genutzt werden.

Um über die gesamte Länge des flexiblen Leitungsrohrs hinweg für ausreichende Flexibilität zu sorgen und somit die Gefahr des Abknickens zu mindern, wird vorgeschlagen, dass das flexible Leitungsrohr eine Mehrzahl von Wellrohrabschnitten oder/und eine Mehrzahl von Glattrohrabschnitten umfasst, wobei Wellrohrabschnitte und Glattrohrabschnitte einander abwechselnd aufeinander folgen. Dabei kann dann weiterhin vorgesehen sein, dass alle Glattrohrabschnitte des flexiblen Leitungsrohrs im Wesentlichen die vorbestimmte Länge aufweisen.

Das flexible Leitungsrohr kann beispielsweise aus Polypropylen-Material aufgebaut sein. Dies bedeutet, dass vergleichsweise kostengünstiges Aufbaumaterial für das flexible Leitungsrohr eingesetzt wird, das auf Grund seiner hohen Flexibilität weiterhin für eine gute Verformbarkeit sorgt.

Um im Bereich der Anbindung des flexiblen Leitungsrohrs an einen Leitungsverbinder für die geforderte stabile Kopplung sorgen zu können, wird weiterhin vorgeschlagen, dass die Stützhülse aus Polyamid-Material, vorzugsweise PA-6, aufgebaut ist.

Der Leitungsverbinder kann aus Polyoxymethylen-Material (POM) aufgebaut sein.

Weiterhin kann vorgesehen sein, dass das Verhältnis der Wellrohrabschnittslänge zur Glattrohrabschnittslänge größer als 1,2 ist.

Derartige flexible Leitungsrohre werden, wie eingangs bereits dargelegt, im allgemeinen in einem kontinuierlichen Fertigungsprozess durch Extrusion hergestellt. Dabei ist der Übergang von Glattrohrabschnitten zu Wellrohrabschnitten kritisch, da hier die Gefahr des Bildens von Dünnbereichen mit Blaseneinschluss und somit einer Qualitätsbeeinträchtigung besteht. Um diesem Problem entgegenzutreten, kann weiterhin vorgesehen sein, dass ein Innendurchmesser der ersten auf den Glattrohrabschnitt folgenden Innenwelle des Wellrohrabschnitts größer ist, als der Innendurchmesser von von dem Glattrohrabschnitt weiter entfernt liegenden Innenwellen des Wellrohrabschnitts.

Es hat sich gezeigt, dass durch eine derartige allmähliche Abnahme der Innendurchmesser der Innenwellen des Wellrohrabschnitts das aus dem Übergang Glattrohrabschnitt/Wellrohrabschnitt sich ergebende Problem des Bildens von Dünnbereichen eliminiert werden kann und somit ein flexibles Leitungsrohr mit über seine gesamte Länge hoher Festigkeit erzeugt werden kann.

Auch bei derartiger Ausgestaltung des flexiblen Leitungsrohrs kann vorgesehen sein, dass es eine Mehrzahl von Wellrohrabschnitten und eine Mehrzahl von Glattrohrabschnitten aufweist, wobei Wellrohrabschnitte und Glattrohrabschnitte einander abwechselnd aufeinander folgen und wobei das Verhältnis der Wellrohrabschnittslänge zur Glattrohrabschnittslänge größer als 1,2 ist.

Durch das Vorsehen dieses Längenverhältnisses der Länge der Wellrohrabschnitte zur Länge der Glattrohrabschnitte wird sichergestellt, dass ein wesentlicher Längenanteil des flexiblen Leitungsrohrs durch Wellrohrabschnitte gebildet ist, welche primär für ausreichend Flexibilität sorgen. Dies ist insbesondere in Verbindung mit der vorangehend definierten Fluidleitung vorteilhaft, da diese auf Grund der vorgesehenen Art der Verbindung des flexiblen Leitungsrohrs mit einem Leitungsverbinder auch vergleichsweise kurze Glattrohrabschnitte zulässt.

Als besonders vorteilhaft hat sich ein Verhältnis dieser Längen herausgestellt, das größer als 2,5 ist, vorzugsweise jedoch kleiner als 4 ist. Die Obergrenze für das Verhältnis der Länge der Wellrohrabschnitte zur Länge der Glattrohrabschnitte stellt sicher, dass zwischen einzelnen Wellrohrabschnitten ausreichend häufig Glattrohrabschnitte vorhanden sind. Dies gestattet auch den Aufbau vergleichsweise kurzer Fluidleitungen aus einem in einem Endlosverfahren hergestellten flexiblen Leitungsrohr. Wie vorangehend bereits dargelegt, ist es besonders vorteilhaft, wenn das flexible Leitungsrohr aus Polypropylen-Material aufgebaut ist.

Insbesondere beim Einsatz eines flexiblen Leitungsrohrs zum Zuführen von Flüssigkeit zu den Düsen einer Scheibenwaschanlage ist es vorteilhaft, wenn der Innendurchmesser der Glattrohrabschnitte im Bereich von 4 bis 5 mm liegt. Es hat sich gezeigt, dass mit einer derartigen Abmessung ausreichend Hohlraum zum Fördern von Flüssigkeit zu den Spritzdüsen einer Scheibenwaschanlage bereitgestellt wird, selbstverständlich unter Berücksichtigung der in derartigen Systemen vorherrschenden Druckverhältnisse.

Soll ein erfindungsgemäßes flexibles Leitungsrohr zum Zuführen von Flüssigkeit zu den Spritzdüsen einer.Scheinwerferwaschanlage eingesetzt werden, so ist es besonders vorteilhaft, wenn der Innendurchmesser der Glattrohrabschnitte im Bereich von 8 bis 9 mm liegt. Hier wird also ein größeres Volumen für den Durchtritt der zu fördernden Flüssigkeit bereitgestellt, was insbesondere daher von Vorteil ist, da bei Scheinwerferwaschanlagen innerhalb vergleichsweise kurzer Zeit ein großer Druck aufgebaut werden muss, der entsprechend größere Volumina erfordert, als dies beispielsweise im Bereich von Scheibenwaschanlagen der Fall ist.

Weiter kann vorgesehen sein, dass der Innendurchmesser der Wellrohrabschnitte kleiner ist als der Innendurchmesser der Glattrohrabschnitte.

An dieser Stelle sei darauf hingewiesen, dass die erfindungsgemäße Fluidleitung und das erfindungsgemäße flexible Leitungsrohr für eine derartige Fluidleitung nicht nur dazu eingesetzt werden können, um Flüssigkeit zur Kraftfahrzeugscheibenreinigung oder zur Kraftfahrzeugscheinwerferreinigung zuzuführen, sondern auch zur Führung von Gasen bzw. Gasgemischen, beispielsweise Luft oder/und Gemischen von Luft mit anderen Gasen, beispielsweise zum Be- oder/und Entlüften.

Die vorliegende Erfindung wird nachfolgend mit Bezug auf die beiliegenden Zeichnungen detailliert beschrieben. Es zeigt:
- Fig. 1: eine Ansicht einer erfindungsgemäßen Fluidleitung;
- Fig. 2: einen im Längsschnitt dargestellten Abschnitt eines flexiblen Lei- tungsrohrs;
- Fig. 3: einen Endabschnitt eines flexiblen Leitungsrohrs vor Herstellung der Verbindung mit einem Leitungsverbinder;
- Fig. 4: den in Fig. 3 dargestellten Endabschnitt des Leitungsrohrs nach her- gestellter Verbindung mit dem Leitungsverbinder;
- Fig. 5: eine Teil-Längsschnittansicht eines flexiblen Leitungsrohrs.

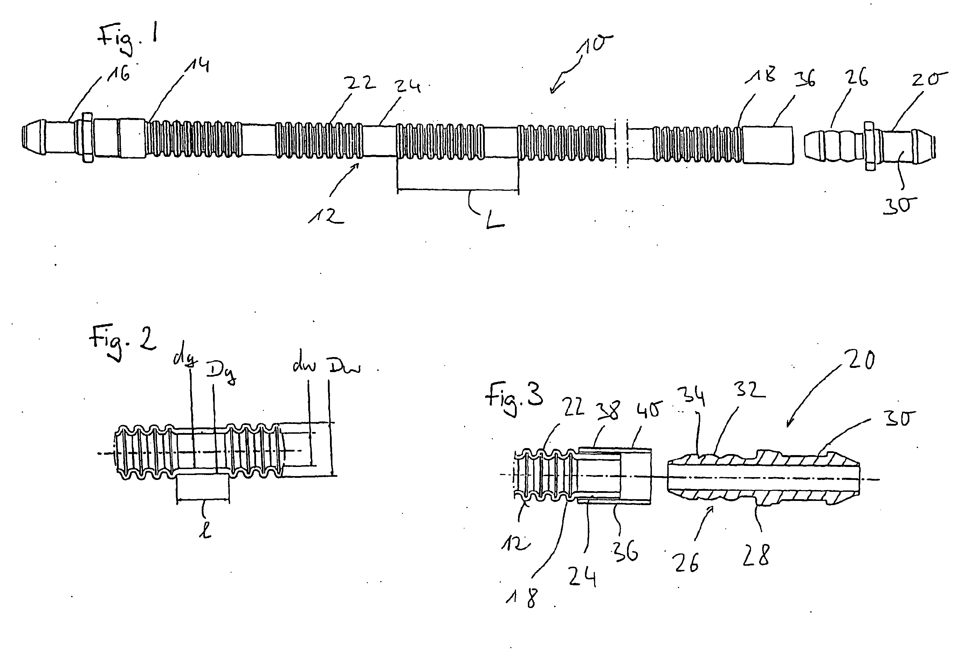

In Fig. 1 ist eine Fluidleitung allgemein mit 10 bezeichnet. Diese Fluidleitung 10 kann beispielsweise dazu eingesetzt werden, in Kraftfahrzeugen Flüssigkeit von einem Flüssigkeitsreservoir zu den Spritzdüsen einer Scheibenwaschanlage oder einer Scheinwerferwaschanlage zu fördern. Es sei hier darauf hingewiesen, dass selbstverständlich auch der Einsatz in anderen Bereichen, beispielsweise zur Kraftstoffleitung oder zur Leitung gasförmiger Medien, denkbar ist. Auch ist selbstverständlich der Einsatz in anderen Bereichen als in Kraftfahrzeugen denkbar.

Die Fluidleitung 10 umfasst ein flexibles Leitungsrohr 12, das im dargestellten Beispiel an seinem Endbereich 14 bereits mit einem Leitungsverbinder 16 verbunden ist und das in seinem Endbereich 18 vor der Verbindung mit einem Leitungsverbinder 20 steht. Das flexible Leitungsrohr 12 weist eine Mehrzahl von Wellrohrabschnitten 22 und Glattrohrabschnitten 24 auf. Die Wellrohrabschnitte 22 und die Glattrohrabschnitte 24 folgen abwechselnd aufeinander. Das flexible Leitungsrohr 12 ist beispielsweise aus Polypropylen-Material hergestellt und weist somit bei vergleichsweise kostengünstigem Aufbau eine hohe Flexibilität auf. Dieses flexible Leitungsrohr 12 kann in einem Extrusionsverfahren als Endlosrohr hergestellt werden, und die dann zum Aufbau einer bestimmten Fluidleitung erforderliche Länge kann von einem beispielsweise auf eine Rolle aufgewickelten Rohr abgeschnitten werden. Insbesondere dann, wenn an beiden Endbereichen 14 und 18 das flexible Leitungsrohr 12 mit einem jeweiligen Leitungsverbinder 16, 20 zu koppeln ist, wird die erforderliche Länge so vom verbleibenden Strang getrennt, dass an jedem Endbereich 14, 18 ein Glattrohrabschnitt 24 liegt, der in nachfolgend noch zu beschreibender Art und Weise dann mit einem jeweiligen Leitungsverbinder 16 oder 20 gekoppelt wird. Um den verbleibenden Teil des flexiblen Leitungsrohrs dann in entsprechender Weise nutzen zu können, muss zunächst ein Wellrohrabschnitt 22 von diesem abgetrennt werden, so dass dieser Teil wieder mit einem Glattrohrabschnitt beginnt. Soll ein derartiges flexibles Leitungsrohr 12 beispielsweise zum Aufbau einer Fluidleitung 10 eingesetzt werden, die zur Zufuhr von Flüssigkeit zu den Spritzdüsen einer Scheibenwaschanlage genutzt werden soll, so kann das flexible Leitungsrohr 12 mit für diesen Einsatzzweck sich als besonders vorteilhaft darstellenden Bemaßungen hergestellt werden. So hat sich gezeigt, dass es vorteilhaft ist, wenn die Gesamtlänge L eines einen Wellrohrabschnitt 22 und einen Glattrohrabschnitt 24 umfassenden Längenabschnitts des flexiblen Leitungsrohrs 12 im Bereich von etwa 25 mm liegt, wobei vorteilhafterweise dann die Länge I eines Glattrohrabschnitts 24 bei etwa 7 mm liegt. Für diesen Einsatzzweck hat es sich weiterhin als vorteilhaft erwiesen, wenn der Innendurchmesser dg eines Glattrohrabschnitts 24 bzw. aller Glattrohrabschnitte 24 im Bereich von 4,7 mm liegt, während zum Bereitstellen einer ausreichenden Wandungsstärke bzw. Stabilität im Bereich der Glattrohrabschnitte 24 der Außendurchmesser Dg in diesem Bereich bei etwa 6 mm liegen kann. Der minimale Innendurchmesser dw eines jeweiligen Wellrohrabschnitts 22 kann bei etwa 4,5 mm liegen, ist also allgemein etwas kleiner, als der Innendurchmesser dg eines Glattrohrabschnitts 24, während der maximale Außendurchmesser Dw des Wellrohrabschnitts 22 bei etwa 7,1 mm liegen kann.

Es ergibt sich also mit den vorangehenden Maßangaben ein flexibles Leitungsrohr 12, das einerseits ausreichend Volumen bereitstellt, um die erforderliche Flüssigkeitsmenge unter den vorherrschenden Druckverhältnissen zu den Spritzdüsen einer Scheibenwaschanlage leiten zu können. Andererseits ist auf Grund des vorhandenen Längenverhältnisses der Wellrohrabschnitte 22 und der Glattrohrabschnitte 24 für ausreichend Flexibilität des flexiblen Leitungsrohrs 12 gesorgt. Man erkennt, dass bei den angegebenen Maßen dieses Verhältnis einen Wert von etwa 2,5 aufweist. Je größer dieses Verhältnis ist, desto größer ist der Längenanteil der Wellrohrabschnitte 22 und somit auch die Flexibilität des Leitungsrohrs 12. Werden jedoch die Wellrohrabschnitte 22 zu lang, so bringt dies Probleme bei dem Erfordernis, vergleichsweise kurze Fluidleitungen aufzubauen, mit sich, da ein Trennen des flexiblen Leitungsrohrs im allgemeinen nur im Bereich von Glattrohrabschnitten 24 möglich bzw. sinnvoll ist.

Soll ein derartiges flexibles Leitungsrohr 12 bzw. eine damit aufgebaute Fluidleitung im Bereich einer Scheinwerferreinigungsanlage eingesetzt werden, also Flüssigkeit von einem Flüssigkeitsreservoir zu den Spritzdüsen einer Scheinwerferwaschanlage leiten, so hat es sich als vorteilhaft erwiesen, die Glattrohrabschnitte 24 mit einem Innendurchmesser dg von 8,5 mm und einem Außendurchmesser Dg von 10,5 mm auszugestalten. Die Wellrohrabschnitte 22 können dabei einen minimalen Innendurchmesser dw von 7,5 mm und einen maximalen Außendurchmesser Dw von 12,75 mm aufweisen. Die Länge der Wellrohrabschnitte 22 kann bei einem derartigen größer dimensionierten flexiblen Leitungsrohr 12 dann im Bereich von 15 mm liegen, während die Glattrohrabschnitte 24 eine Länge I im Bereich von 12 mm aufweisen können. Es ergibt sich dabei also ein Längenverhältnis der Länge der Wellrohrabschnitte 22 zur Länge der Glattrohrabschnitte 24 von etwa 1,25. Obgleich hier also der Anteil der Wellrohrabschnitte 22 an der Gesamtlänge L etwas geringer ist, besteht auf Grund der größeren Gesamtabmessung des flexiblen Leitungsrohrs 12 und insbesondere auch auf Grund des Einsatzes eines sehr flexiblen Aufbaumaterials, nämlich Polypropylen, auch bei dieser Ausgestaltung praktisch keine Gefahr, dass das flexible Leitungsrohr 12 bei den beim Einbau allgemein zu erwartenden Krümmungen geknickt wird.

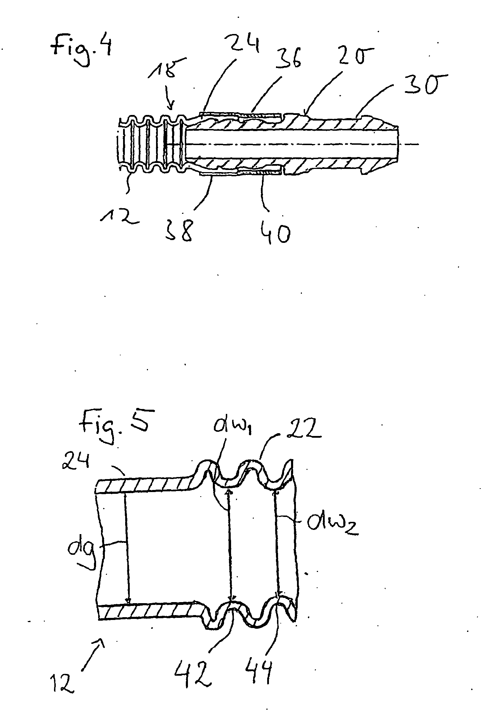

Um das vorangehend beschriebene flexible Leitungsrohr 12 in ein Gesamtsystem integrieren zu können, also die in Fig. 1 dargestellte Fluidleitung 10 mit den Leitungsverbindern 16, 20 bereitstellen zu können, wird zwischen dem flexiblen Leitungsrohr 12 und den Leitungsverbindern 16, 20 eine Verbindung hergestellt, die nachfolgend mit Bezug auf die Figuren 3 und 4 anhand des Leitungsverbinders 20 detailliert erläutert wird.

Man erkennt in Fig. 3 den Leitungsverbinder 20, der im Wesentlichen in zwei Bereiche untergliedert ist. Ein Leitungsrohr-Anschlussabschnitt 26 dient zur Kopplung mit dem flexiblen Leitungsrohr 12, während ein über einen Schulterbereich 28 an den Leitungsrohr-Anschlussabschnitt 26 anschließender Verbindungsabschnitt 30 dazu dient, den Leitungsverbinder 20 bzw. die gesamte Fluidleitung 10 beispielsweise an eine Fluidpumpe, ein Fluidreservoir oder sonstige Systembereiche anzukoppeln. Der Leitungsrohr-Anschlussabschnitt 26 ist im dargestellten Beispiel an seiner Oberfläche 32 wellenartig strukturiert und stellt in seinem freien Endbereich eine Schulter 34 bereit. Durch diese Formgebung bzw. Strukturierung wird versucht, mit dem flexiblen Leitungsrohr 12 nicht nur einen reibschlüssigen Kontakt herzustellen, sondern auch durch das Ineinandereingreifen des Leitungsverbinders 20 mit dem Material des flexiblen Leitungsrohrs 12 eine Art formschlüssige Verbindung zu generieren.

Wie bereits vorangehend dargelegt, wird das flexible Leitungsrohr 12 zur Herstellung der Fluidleitung so bereitgestellt, dass es in seinen jeweiligen Endbereichen, hier im Endbereich 18, einen vollständigen Glattrohrabschnitt 24 aufweist. Man erkennt in Fig. 3, dass dieser Glattrohrabschnitt 24 bzw. alle am flexiblen Leitungsrohr 12 vorhandenen Glattrohrabschnitte 24 eine Länge aufweisen, die deutlich kürzer ist als die Länge des Leitungsrohr-Anschlussabschnittes 26 des Leitungsverbinders 20. Wird der Leitungsverbinder 20 mit seinem Leitungsrohr-Anschlussabschnitt 26 in den am Endbereich 18 vorgesehenen Glattrohrabschnitt 24 so weit eingeschoben, dass er nur in diesem Glattrohrabschnitt 24 liegt, jedoch nicht mehr in den dann folgenden Wellrohrabschnitt 22 eingreift, so ergibt sich die in Fig. 4 erkennbare Situation, bei welcher dieser Glattrohrabschnitt 24 nur einen Teilbereich des Leitungsrohr-Anschlussabschnittes 26 überdeckt. In diesem Bereich liegt auf Grund geeigneter Relativbemaßung, also einer im Vergleich zur Innenabmessung des Glattrohrabschnitts 24 vorhandenen Überdimensionierung des Leitungsrohr-Anschlussabschnitts 26, der Glattrohrabschnitt 24 unter Vorspannung an der Oberfläche des Leitungsrohr-Verbindungsabschnitts 26 an, so dass sich die in Fig. 4 auch erkennbare "Verzahnung" mit der Oberflächenstrukturierung, insbesondere der Schulter 34 ergibt.

Da jedoch einerseits bei dem erfindungsgemäß aufgebauten flexiblen Leitungsrohr 12 die Glattrohrabschnitte 24 zum Sicherstellen der ausreichenden Flexibilität vergleichsweise kurz gestaltet sind und überdies das flexible Leitungsrohr 12 aus sehr elastischem Material, also beispielsweise Polypropylen-Material, aufgebaut ist, ist zur festen Kopplung des flexiblen Leitungsrohrs 12 mit dem Leitungsverbinder 20 weiterhin eine Stützhülse 36 vorgesehen. Diese ist beim dargestellten Ausgestaltungsbeispiel so bemessen, dass sie länger ist als der Glattrohrabschnitt 24. Mit einem ersten Hülsenabschnitt 38 liegt die Stützhülse 36 den Glattrohrabschnitt 24 überdeckend an dessen Außenoberfläche an und presst diesen somit verstärkt gegen den Leitungsrohr-Anschlussabschnitt 26. Mit einem zweiten Hülsenabschnitt 40 erstreckt sich die Stützhülse 36 über den Glattrohrabschnitt 24 hinaus, und zwar vorzugsweise bis zu der am Leitungsverbinder 20 gebildeten Schulter 28. Mit diesem zweiten Hülsenabschnitt 40 kann die Stützhülse 36 an der Außenoberfläche des Leitungsrohr-Anschlussabschnittes 26 anliegen und überdeckt diesen. Da die Stützhülse 36 aus im Vergleich zum Aufbaumaterial des flexiblen Leitungsrohrs wesentlich festerem, starrerem Material, beispielsweise Polyamid-Material, aufgebaut ist, und da diese Stützhülse 36 so dimensioniert ist, dass beim Einschieben des Leitungsverbinders 20 in den aus Glattrohrabschnitt 24 und Stützhülse 36 gebildeten Verbund der Glattrohrabschnitt 24 nach radial außen gegen die Innenoberfläche des ersten Hülsenabschnitt 38 gepresst wird, wird somit eine auch bei vergleichsweise hohen Umgebungstemperaturen sehr feste und vor allem fluiddichte Anbindung des flexiblen Leitungsrohrs 12 an den Leitungsverbinder 20 hergestellt. Dies wird dadurch noch unterstützt, dass im zweiten Hülsenabschnitt 40 die Stützhülse 36 an der Außenoberfläche des Leitungsverbinders anliegt , wenn eine entsprechende Relativdimensionierung zwischen der Stützhülse 36 und dem Leitungsrohr-Anschlussabschnitt 26 gegeben ist.

Um die Montage einer vorangehend beschriebenen Fluidleitung 10 zu erleichtern, kann es vorteilhaft sein, das flexible Leitungsrohr 12 mit einer an einem jeweiligen Endbereich 14 oder/und 18 vorzusehenden Stützhülse 36 zu einer vormontierten Baugruppe zusammenzufassen und in diese Baugruppe dann den Leitungsverbinder 20 mit seinem Leitungsrohr-Anschlussabschnitt 26 einzuführen. In dieser Vormontagesituation kann ein ungewolltes Verschieben oder Abfallen einer jeweiligen Stützhülse 36 beispielsweise dadurch verhindert werden, dass diese im Vergleich zum Außendurchmesser des Glattrohrabschnitts 24 einen geringfügig kleineren Innendurchmesser hat und somit durch Reibschluss am Glattrohrabschnitt 24 gehalten wird. Bei einer alternativen Variante kann die Stützhülse an ihrer Innenoberfläche eine oder mehrere nach radial innen gerichtete Ausbauchungen, beispielsweise in Form von kugelkalottenartigen Ausbauchungen oder auch von langgestreckten Rippen oder dergleichen aufweisen, welche so bemessen sind, dass sie unter geringfügigem Druck an der Außenoberfläche eines Glattrohrabschnitts 24 anliegen, im hergestellten Verbindungszustand mit dem Leitungsverbinder 20 jedoch die Funktionalität der Stützhülse, also das Anpressen des Glattrohrabschnitts 24 auf die Außenoberfläche des Leitungsrohr-Anschlussabschnittes 26, nicht beeinträchtigen.

Bei der vorangehend beschriebenen Art und Weise der festen Ankopplung des flexiblen Leitungsrohrs 12 an einen oder mehrere Leitungsverbinder 16 bzw. 20 wird trotz vergleichsweise kurz ausgestalteter Glattrohrabschnitte 24 durch den Einsatz der Stützhülse 36 eine stabile und insbesondere bei nicht vollständiger Überdeckung des Leitungsrohr-Anschlussabschnittes 26 durch einen Glattrohrabschnitt 24 optisch ansprechende Kopplung realisiert, bei welcher nicht der optische Anschein entstehen kann, dass auf Grund eines nicht vollständig in das flexible Leitungsrohr 12 eingeschobenen Leitungsrohr-Anschlussabschnittes 26 das flexible Leitungsrohr 12 sich zumindest teilweise vom Leitungsverbinder 20 gelöst hat. Vor allem wird bei dieser Art der Kopplung der Einsatz eines aus flexiblem Material aufgebauten und auf Grund seiner Formgebung, also des Bereitstellens vergleichsweise kurzer Glattrohrabschnitte, sehr flexiblen Leitungsrohrs möglich. Dies ist insbesondere bei den vorangehend angegebenen Einsatzzwecken von besonderem Vorteil, der dann noch weiter zu tragen kommt, wenn eine derartige Fluidleitung dazu genutzt wird, Flüssigkeit zu einer Spritzdüse zu führen, die an einem sich bewegenden Scheibenwischer angebracht ist.

Eine alternative Ausgestaltungsvariante eines flexiblen Leitungsrohrs 12 ist in Fig. 5 dargestellt. Man erkennt hier den Übergang eines Glattrohrabschnitts 24 zu einem Wellrohrabschnitts 22 mit den beiden ersten auf den Glattrohrabschnitt 24 folgenden Innenwellen 42, 44. Man erkennt, dass die erste auf den Glattrohrabschnitt 24 folgende Innenwelle 42 des Wellrohrabschnitts 22 einen Innendurchmesser dw₁ aufweist, der geringfügig größer ist als der Innendurchmesser dw₂ der zweiten Innenwelle 44 bzw. der dann folgenden Innenwellen. Durch diese allmähliche Abnahme des Innendurchmessers dw der Innenwellen in Richtung von einem jeweiligen Glattrohrabschnitt 24 weg, wird sichergestellt, dass bei dem Fertigungsprozess im Übergangsbereich vom Glattrohrabschnitt 24 zum Wellrohrabschnitt 22 keine Dünnbereiche entstehen, welche die strukturelle Festigkeit des flexiblen. Leitungsrohrs 12 beeinträchtigen könnten. Beispielsweise kann dann, wenn der minimale Innendurchmesser dw im Wellrohrabschnitt 22, der beispielsweise ab der zweiten Innenwelle 44 bereitgestellt sein kann, im Bereich von 7,5 bis 7,8 mm liegt, der Innendurchmesser dw₁ der ersten Innenwelle 42 bei etwa 8 bis 8,1 mm liegen, also immer noch etwas kleiner sein als der Innendurchmesser dg des Glattrohrabschnitts 24, der im Bereich von 8,3 bis 8,5 mm liegen kann. Eine entsprechende Durchmesserabstufung kann selbstverständlich auch bei flexiblen Leitungsrohren 12 mit anderen Dimensionierungen vorgesehen sein. Weiterhin ist es auch möglich, alternativ oder zusätzlich zu dieser Verringerung des Innendurchmessers auch den Außendurchmesser der auf einen jeweiligen Glattrohrabschnitt 24 folgenden Außenwellen eines Wellrohrabschnitts 22 allmählich bzw. stufenartig zunehmen zu lassen.

Es ist selbstverständlich, dass in verschiedenen Aspekten eine erfindungsgemäße Fluidleitung bzw. ein erfindungsgemäß aufgebautes flexibles Leitungsrohr anders gestaltet sein können, als vorangehend dargestellt. So könnte beispielsweise die Stützhülse 36 eine Länge aufweisen, die im Wesentlichen der Länge des von dieser an einem Leitungsverbinder 20 zu fixierenden Glattrohrabschnitts 24 entspricht. Dies bietet sich vor allem dann an, wenn in Anpassung an bestimmte Glattrohrabschnittslängen I auch kürzere Leitungsrohr-Anschlussabschnitte 26 an speziell gestalteten Leitungsverbindern 20 zum Einsatz gelangen. Auch dabei wird der Glattrohrabschnitt 24 durch die vergleichsweise starre und wärmeunempfindliche, kürzer gestaltete Stützhülse 36 fest gegen den Außenumfang des Leitungsrohr-Anschlussabschnitts 26 gepresst.

## Patentansprüche

1. Fluidleitung (10) zum Einsatz in Kraftfahrzeugen zum Zuführen von Flüssigkeit zur Kraftfahrzeugscheibenreinigung oder zur Kraftfahrzeugscheinwerferreinigung, umfassend:
- ein flexibles Leitungsrohr (12) mit einer Mehrzahl von Wellrohrabschnitten (22) und einer Mehrzahl von Glattrohrabschnitten (24), wobei die Wellrohrabschnitte (22) und die Glattrohrabschnitte (24) einander abwechselnd aufeinander folgen,
- wenigstens einen Leitungsverbinder (16, 20) mit einem Leitungsrohr-Anschlussabschnitt (26), welcher teilweise in einen Glattrohrabschnitt (24) eingeführt ist, wobei der Glattrohrabschnitt (24) eine vorbestimmte Länge (I) aufweist, welche kürzer ist als die Länge des Leitungsrohr-Anschlussabschnittes (26),
**dadurch gekennzeichnet, dass** für jeden Leitungsverbinder (16, 20) eine Stützhülse (36) vorgesehen ist, die so bemessen ist, dass sie länger ist als der Glattrohrabschnitt (24), und dass die Stützhülse (36) mit einem ersten Hülsenabschnitt (38) den Glattrohrabschnitt (24) umgibt und mit einem zweiten Hülsenabschnitt (40) an dem nicht von dem Glattrohrabschnitt (24) überdeckten Bereich des Leitungsrohr-Anschlussabschnittes (26) anliegt, so dass sich eine feste und fluiddichte Anbindung ergibt, und dass
der Leitungsverbinder (20) in einen aus dem Glattrohrabschnitt (24) und der Stützhülse (36) gebildeten Verbund einschiebbar ist und die Stützhülse (36) derart dimensioniert ist, dass bei diesem Einschieben der Glattrohrabschnitt (24) nach radial außen gegen die Innenoberfläche des ersten Hülsenabschnitts (38) gepresst wird, so dass die Stützhülse (36) den Glattrohrabschnitt (24) gegen den Leitungsrohr-Anschlussabschnitt (26) presst.

2. Fluidleitung (10) nach Anspruch 1,
**dadurch gekennzeichnet, dass** alle Glattrohrabschnitte (24) des flexiblen Leitungsrohrs (12) im Wesentlichen die vorbestimmte Länge (I) aufweisen.

3. Fluidleitung (10) nach Anspruch 1 oder 2,
**dadurch gekennzeichnet, dass** das flexible Leitungsrohr (12) aus Polypropylen-Material aufgebaut ist.

4. Fluidleitung (10) nach einem der Ansprüche 1 bis 3,
**dadurch gekennzeichnet, dass** die Stützhülse (36) aus Polyamid-Material, vorzugsweise PA-6, aufgebaut ist.

5. Fluidleitung (10) nach einem der Ansprüche 1 bis 4,
**dadurch gekennzeichnet, dass** der Leitungsverbinder (16, 20) aus Polyoxymethylen-Material aufgebaut ist.

6. Fluidleitung (10) nach einem der vorangehenden Ansprüche, **dadurch gekennzeichnet, dass** ein Innendurchmesser (dw₁) der ersten auf den Glattrohrabschnitt (24) folgenden Innenwelle (42) des Wellrohrabschnitts (22) größer ist, als der Innendurchmesser (dw₂) von von dem Glattrohrabschnitt (24) weiter entfernt liegenden Innenwellen (44) des Wellrohrabschnitts (22).

7. Fluidleitung (10) nach einem der vorhergehenden Ansprüche,
**dadurch gekennzeichnet, dass** das Leitungsrohr (12) eine Mehrzahl von Wellrohrabschnitten (22) und eine Mehrzahl von Glattrohrabschnitten (24) aufweist, wobei Wellrohrabschnitte (22) und Glattrohrabschnitte (24) einander abwechselnd aufeinander folgen und wobei das Verhältnis der Wellrohrabschnittslänge zur Glattrohrabschnittslänge (I) größer als 1,2 ist.

8. Fluidleitung (10) nach Anspruch 7,
**dadurch gekennzeichnet, dass** das Verhältnis größer als 2,5 ist.

9. Fluidleitung (10) nach Anspruch 7 oder 8,
**dadurch gekennzeichnet, dass** das Verhältnis kleiner als 4 ist.

10. Fluidleitung (10) nach einem der Ansprüche 6 bis 9,
**dadurch gekennzeichnet, dass** der Innendurchmesser (dg) der Glattrohrabschnitte (24) im Bereich von 4 bis 5 mm liegt.

11. Fluidleitung (10) nach einem der Ansprüche 6 bis 10,
**dadurch gekennzeichnet, dass** der Innendurchmesser (dg) der Glattrohrabschnitte (24) im Bereich von 8 bis 9 mm liegt.

12. Fluidleitung (10) nach einem der Ansprüche 6 bis 11,
**dadurch gekennzeichnet, dass** der minimale Innendurchmesser (dw) der Wellrohrabschnitte (22) kleiner ist als der Innendurchmesser (dg) der Glattrohrabschnitte (24).

## Claims

1. A fluid conduit (10) for use in motor vehicles to feed fluid for motor vehicle screen cleaning or for motor vehicle headlight cleaning, comprising:
- a flexible conduit pipe (12) with a plurality of corrugated pipe sections (22) and a plurality of smooth pipe sections (24), wherein the corrugated pipe sections (22) and the smooth pipe sections (24) alternately succeed one another,
- at least one conduit connector (16,20) with a conduit pipe connecting section (26) which is inserted partly into a smooth pipe section (24), wherein the smooth pipe section (24) is of predetermined length (1) which is shorter than the length of the conduit pipe connecting section (26),
**characterised in that** for each conduit connector (16,20) a supporting sleeve (36) is provided, which is of such dimensions that it is longer than the smooth pipe section (24), and **in that** the supporting sleeve (36) surrounds the smooth pipe section (24) with a first sleeve section (38) and with a second sleeve section (40) bears against the region of the conduit pipe connecting section (26) not overlapped by the smooth pipe section (24) so that a secure and fluidtight joint is provided, and **in that**
the conduit connector (20) can be inserted into a connection formed by the smooth pipe section (24) and the supporting sleeve (36), and the supporting sleeve (36) is of such dimensions that in the event of this insertion the smooth pipe section (24) is pressed radially outwards against the inner surface of the first sleeve section (38) so the supporting sleeve (36) presses the smooth pipe section (24) against the conduit pipe connecting section (26).

2. A fluid conduit (10) according to Claim 1,
**characterised in that** all the smooth pipe sections (24) of the flexible conduit pipe (12) are of substantially the predetermined length (1).

3. A fluid conduit (10) according to Claim 1 or 2,
**characterised in that** the flexible conduit pipe (12) is made of polypropylene material.

4. A fluid conduit (10) according to any one of Claims 1 to 3,
**characterised in that** the supporting sleeve (36) is made of polyamide material, preferably PA-6.

5. A fluid conduit (10) according to any one of Claims 1 to 4,
**characterised in that** the conduit connector (16,20) is made of polyoxymethylene material.

6. A fluid conduit (10) according to any one of the preceding Claims,
**characterised in that** an inner diameter (dw₁) of the first inner corrugation (42) of the corrugated pipe section (22) following the smooth pipe section (24) is larger than the inner diameter (dw₂) of inner corrugations (44) of the corrugated pipe section (22) situated more distant from the smooth pipe section (24).

7. A fluid conduit (10) according to any one of the preceding Claims,
**characterised in that** the conduit pipe (12) has a plurality of corrugated pipe sections (22) and a plurality of smooth pipe sections (24), wherein corrugated pipe sections (22) and smooth pipe sections (24) alternately succeed one another, and wherein the ratio of the corrugated pipe section length to the smooth pipe section length (1) is higher than 1.2.

8. A fluid conduit (10) according to Claim 7, **characterised in that** the ratio is higher than 2.5.

9. A fluid conduit (10) according to Claim 7 or 8, **characterised in that** the ratio is higher than 4.

10. A fluid conduit (10) according to any one of Claims 6 to 9,
**characterised in that** the inner diameter (dg) of the smooth pipe sections (24) is in the range of 4 to 5 mm.

11. A fluid conduit (10) according to any one of Claims 6 to 10,
**characterised in that** the inner diameter (dg) of the smooth pipe sections (24) is in the range of 8 to 9 mm.

12. A fluid conduit (10) according to any one of Claims 6 to 11, **characterised in that** the minimum inner diameter (dw) of the corrugated pipe sections (22) is smaller than the inner diameter (dg) of the smooth pipe sections (24).

## Revendications

1. Conduite à fluide (10) destinée à être utilisée dans des véhicules automobiles pour l'amenée de liquide au nettoyage des vitres du véhicule automobile ou au nettoyage des phares du véhicule automobile, comprenant :
- un tuyau flexible pour conduite (12) doté d'une pluralité de sections de tuyau ondulé (22) et d'une pluralité de sections de tuyau lisse (24), les sections de tuyau ondulé (22) et les sections de tuyau lisse (24) se succédant en alternance,
- au moins un raccord de conduite (16, 20) avec une section de raccordement de tuyau pour conduite (26) qui est partiellement introduite dans une section de tuyau lisse (24), la section de tuyau lisse (24) présentant une longueur prédéterminée (I) plus courte que la longueur de la section de raccordement de tuyau pour conduite (26),
**caractérisée en ce que** pour chaque raccord de conduite (16, 20), un manchon d'appui (36) est prévu, lequel est dimensionné de sorte à être plus long que la section de tuyau lisse (24) et **en ce que** le manchon d'appui (36) entoure par une première section de manchon (38) la section de tuyau lisse (24) et repose par une seconde section de manchon (40) sur la zone, non recouverte par la section de tuyau lisse (24), de la section de raccordement de tuyau pour conduite (26) de sorte qu'il résulte une liaison fixe et étanche au fluide, et **en ce que** le raccord de conduite (20) peut être inséré dans un assemblage formé de la section de tuyau lisse (24) et du manchon d'appui (36) et **en ce que** le manchon d'appui (36) est dimensionné de telle manière que lors de cette insertion, la section de tuyau lisse (24) soit pressée radialement vers l'extérieur contre la surface intérieure de la première section de manchon (38) de sorte que le manchon d'appui (36) presse la section de tuyau lisse (24) contre la section de raccordement de tuyau pour conduite (26).

2. Conduite à fluide (10) selon la revendication 1, **caractérisée en ce que** toutes les sections de tuyau lisse (24) du tuyau flexible pour conduite (12) présentent sensiblement la longueur prédéterminée (I).

3. Conduite à fluide (10) selon la revendication 1 ou 2, **caractérisée en ce que** le tuyau flexible pour conduite (12) est constitué de matériau de propylène.

4. Conduite à fluide (10) selon l'une quelconque des revendications 1 à 3, **caractérisée en ce que** le manchon d'appui (36) est constitué de matériau de polyamide, de préférence de PA-6.

5. Conduite à fluide (10) selon l'une quelconque des revendications 1 à 4, **caractérisée en ce que** le raccord de conduite (16, 20) est constitué de matériau en polyoxyméthylène.

6. Conduite à fluide (10) selon l'une quelconque des revendications précédentes, **caractérisée en ce qu'**un diamètre intérieur (dw₁) de la première ondulation intérieure (42) suivant la section de tuyau lisse (24) de la section de tuyau ondulé (22) est supérieur au diamètre intérieur (dw₂) des ondulations intérieures (44) plus éloignées de la section de tuyau lisse (24), de la section de tuyau ondulé (22).

7. Conduite à fluide (10) selon l'une quelconque des revendications précédentes, **caractérisée en ce que** le tuyau pour conduite (12) présente une pluralité de sections de tuyau ondulé (22) et une pluralité de sections de tuyau lisse (24), des sections de tuyau ondulé (22) et des sections de tuyau lisse (24) se succédant en alternance et le rapport entre la longueur de section de tuyau ondulé et la longueur de section de tuyau lisse (I) étant supérieur à 1,2.

8. Conduite à fluide (10) selon la revendication 7, **caractérisée en ce que** le rapport est supérieur à 2,5.

9. Conduite à fluide (10) selon la revendication 7 ou 8, **caractérisée en ce que** le rapport est inférieur à 4.

10. Conduite à fluide (10) selon l'une quelconque des revendications 6 à 9, **caractérisée en ce que** le diamètre intérieur (dg) des sections de tuyau lisse (24) est compris entre 4 et 5 mm.

11. Conduite à fluide (10) selon l'une quelconque des revendications 6 à 10, **caractérisée en ce que** le diamètre intérieur (dg) des sections de tuyau lisse (24) est compris entre 8 et 9 mm.

12. Conduite à fluide (10) selon l'une quelconque des revendications 6 à 11, **caractérisée en ce que** le diamètre intérieur minimal (dw) des sections de tuyau ondulé (22) est inférieur au diamètre intérieur (dg) des sections de tuyau lisse (24).
